# EUROPÄISCHE PATENTSCHRIFT

(11) **EP 2 516 209 B1**
(45) Veröffentlichungstag und Bekanntmachung des Hinweises auf die Patenterteilung: **02.10.2013**
(21) Anmeldenummer: 10805196.2
(22) Anmeldetag: 14.12.2010
(51) Int. Cl.: B60N 2/07, B60N 2/08

(54) **VERRIEGELUNGSVORRICHTUNG, SCHIENENVERSTELLSYSTEM, FAHRZEUGSITZ UND VERFAHREN ZUR HERSTELLUNG DES SCHIENENVERSTELLSYSTEMS**
LOCKING DEVICE, RAIL ADJUSTMENT SYSTEM, VEHICLE SEAT, AND METHOD FOR PRODUCING SAID RAIL ADJUSTMENT SYSTEM
DISPOSITIF DE VERROUILLAGE, SYSTÈME DE RÉGLAGE DE RAIL, SIÈGE DE VÉHICULE ET PROCÉDÉ POUR LA FABRICATION DUDIT SYSTÈME DE RÉGLAGE DE RAIL

(30) Priorität: 22.12.2009 DE 102009060431
(43) Veröffentlichungstag der Anmeldung: 31.10.2012
(73) Patentinhaber: Johnson Controls GmbH, 51399 Burscheid (DE)
(72) Erfinder: SCHMALE, Uwe, 42499 Hückeswagen (DE); GIORGIO, Denis, 42899 Remscheid (DE); EWALD, Tobias, 42499 Hückeswagen (DE)
(74) Vertreter: Schwöbel, Thilo K.
(86) Internationale Anmeldenummer: PCT/EP2010/007602
(87) Internationale Veröffentlichungsnummer: WO 2011/085768

(56) Entgegenhaltungen:
- WO-A1-2010/080597
- DE-A1- 4 410 816
- DE-A1- 19 729 111
- GB-A- 2 317 558
- US-A1- 2008 048 087

## Beschreibung

Die Erfindung geht aus von einer Verriegelungsvorrichtung zur Längsverstellung einer Kraftfahrzeugkomponente, insbesondere eines Fahrzeugsitzes, wobei die Verriegelungsvorrichtung ein Sperrmittel aufweist, welches zwischen einer Entriegelungsstellung, in welcher eine Oberschiene gegenüber einer Unterschiene in Längsrichtung verschiebbar ist, und einer Verriegelungsstellung, in welcher die Oberschiene gegenüber der Unterschiene in Längsrichtung verriegelt ist, verschwenkbar ist, wobei wenigstens ein Lagerelement des Sperrmittels gegenüber wenigstens einer Lagerlasche schwenkbar gelagert ist und wobei das Sperrmittel mittels wenigstens einer Feder in die Verriegelungsstellung vorgespannt ist. Die Erfindung betrifft insbesondere eine Verriegelungsvorrichtung für ein Schienenverstellsystem, ein Schienenverstellsystem mit einer derartigen Verriegelungsvorrichtung, sowie einen Fahrzeugsitz mit einem solchen Schienenverstellsystem.

Solche Verriegelungsvorrichtungen sind allgemein bekannt. Beispielsweise ist aus der Druckschrift US 2008 / 0 048 087 A1 eine Schienenverriegelungsvorrichtung für einen Fahrzeugsitz bekannt, bei welcher eine sitzfeste Oberschiene gegenüber einer karosseriefesten Unterschiene verschiebbar ausgebildet ist, wobei eine Relativposition zwischen der Ober- und der Unterschiene mittels einer um eine Schienenlängsachse verschwenkbare Klaue verriegelbar ist. Die Klaue ist dabei mittels einer Klammer an der Oberschiene befestigt, wobei die Klaue mittels Bolzen in Durchgangsöffnungen der Klammer verankert ist und wobei die Klammer mit der Oberschiene fest verschraubt ist. Zur Montageerleichterung ist die Klammer dabei mehrteilig ausgebildet. Darüberhinaus weist die Schienenverriegelungsvorrichtung eine Feder auf, welche die Klaue in Richtung Verriegelungsstellung federelastisch vorbelastet.

Nachteilig an der aus dem Stand der Technik bekannten Schienenverriegelungsvorrichtung ist, dass die Herstellung und die Montage der Schienenverriegelungsvorrichtung vergleichsweise teuer und aufwändig sind. Insbesondere während der Montage sind eine Vielzahl unterschiedlicher Montageschritte durchzuführen, so muss die Klaue zunächst an einem ersten Teil der Klammer und anschließend an einem zweiten Teil der Klammer befestigt werden, anschließend muss das erste und zweite Teil der Klammer mit der Oberschiene verschraubt werden. Ferner muss in einem gesonderten Montageschritt die Feder montiert werden.

Weiterhin ist zum Beispiel aus der GB 2 317 558 A eine gattungsbildende, d.h., dem Oberbegriff des unabhängigen Vorrichtungsanspruchs 1, bekannt.

Die Aufgabe der vorliegenden Erfindung ist es daher, eine Verriegelungsvorrichtung zur Verfügung zu stellen, welche eine im Vergleich zum Stand der Technik deutlich geringere Anzahl von Einzelteilen aufweist und somit wesentlichen kostengünstiger und einfacher herstellbar und montierbar ist. Darüberhinaus wird durch die Reduzierung der Teileanzahl die Haltbarkeit der Verriegelungsvorrichtung erhöht und die Fehleranfälligkeit deutlich reduziert.

Diese Aufgabe wird durch eine Verriegelungsvorrichtung zur Längsverstellung einer Kraftfahrzeugkomponente, insbesondere eines Fahrzeugsitzes, gelöst, wobei die Verriegelungsvorrichtung ein Sperrmittel aufweist, welches zwischen einer Entriegelungsstellung, in welcher eine Oberschiene gegenüber einer Unterschiene in Längsrichtung verschiebbar ist, und einer Verriegelungsstellung, in welcher die Oberschiene gegenüber der Unterschiene in Längsrichtung verriegelt ist, verschwenkbar ist, wobei wenigstens ein Lagerelement des Sperrmittels gegenüber wenigstens einer Lagerlasche schwenkbar gelagert ist und wobei das Sperrmittel mittels wenigstens einer Feder in die Verriegelungsstellung vorgespannt ist, wobei die Feder ferner zur Lagestabilisierung des Lagerelements gegenüber der Lagerlasche vorgesehen ist.

Bei der durch die technischen Merkmale des Anspruchs 1 definierten Verriegelungsvorrichtung wird die Feder somit nicht nur zum Vorspannen des Sperrmittels in die Verriegelungsstellung, sondern gleichzeitig auch zur Lagesicherung des Sperrmittels an der Oberschiene verwendet. Beim Montieren der Feder wird somit gleichzeitig auch das Sperrmittel an der Oberschiene fixiert, so dass im Vergleich zum Stand der Technik weniger Montageschritte bei der Montage der erfindungsgemäßen Verriegelungsvorrichtung erforderlich sind. Darüberhinaus werden die Fertigungstoleranzen der einzelnen Bauteile erhöht, da das Lagerelement federelastisch in der Lagerlasche sicher gehalten wird. Dies hat zur Folge, dass die Herstellungskosten der Bauteile deutlich niedriger sind. Erfindungsgemäß ist vorgesehen, dass die Feder eine Schraubenfeder umfasst, dessen Federachse im Wesentlichen parallel und deckungsgleich zur Schwenkachse verlaufend ausgebildet ist, so dass die erfindungsgemäße Verriegelungsvorrichtung vergleichsweise bauraumkompakt ausgebildet ist. Bevorzugt ist vorgesehen, dass wenigstens ein erster Endbereich der Feder an der Lagerlasche befestigt ist, wobei der erste Endbereich insbesondere einen Befestigungsschenkel aufweist, welcher in wenigstens einer Nut der Lagerlasche kraft- und/oder formschlüssig befestigt ist, so dass die Montage der Feder an der Lagerlasche vergleichsweise einfach ist und gleichzeitig ein sicheres Halten des Lagerelements durch den ersten Endbereich der Feder erzielt wird. Vorzugsweise weist die Lagerlasche eine einseitig offene Ausnehmung auf, wobei das Lagerelement einen in der offenen Ausnehmung angeordneten Lagerbolzen umfasst und wobei der erste Endbereich derart in der offenen Ausnehmung angeordnet ist, dass der Lagerbolzen durch den ersten Endbereich in Richtung der offenen Ausnehmung sicher gehalten wird. Der Lagerbolzen ist dabei gegenüber der Lagerlasche und/oder gegenüber dem Sperrelement drehbar gelagert. In vorteilhafter Weise wird der Lagerbolzen in der offenen Ausnehmung durch die Feder sicher fixiert, wobei unfallbedingte Kräfte parallel zur Längsrichtung von der Lagerlasche aufgenommen werden und nicht auf den ersten Endbereich wirken. Die Sicherheit wird bei der erfindungsgemäßen Verriegelungsvorrichtung somit nicht reduziert. Das Sperrmittel umfasst erfindungsgemäß ein Zwischenteil, an welchem wenigstens ein Sperrzahn angeordnet ist, welcher in der Verriegelungsstellung in Eingriff mit Rastöffnungen der Ober- und Unterschiene ist und welcher in der Entriegelungsstellung außer Eingriff mit den Rastöffnungen der Ober- und Unterschiene ist, wobei ein zweiter Endbereich der Feder das Zwischenteil in Richtung der Verriegelungsstellung federbeaufschlagt, wobei das Zwischenteil und der wenigstens eine Sperrzahn in einem Innenraum zwischen der Ober- und Unterschiene angeordnet sind, so dass eine besonders bauraumkompakte Anordnung erzielt wird. Zur Erhöhung der Stabilität umfasst das Zwischenteil insbesondere eine Mehrzahl von Sperrzähnen, welche jeweils in unterschiedliche Rastöffnungen der Ober- und Unterschiene eingreifen. Besonders bevorzugt ist vorgesehen, dass die Verriegelungsvorrichtung wenigstens einen Sperrzahn zur Spielreduktion aufweist, welcher mit abgeschrägten Zahnflanken derart ausgestattet ist, dass sich der Sperrzahn zur Spielreduktion in Richtung der Rastöffnungen verjüngt. In vorteilhafter Weise wird somit in der Verriegelungsstellung eine Spielreduktion zwischen der Ober- und Unterschiene erzielt. Ferner greift wenigstens ein Sperrzahn der Verriegelungsvorrichtung vorzugsweise in zwei Rastöffnungen der Unterschiene und in eine Rastöffnung der Oberschiene ein, wobei die eine Rastöffnung der Oberschiene zwischen den zwei Rastöffnungen der Unterschiene angeordnet ist. Besonders bevorzugt ist vorgesehen, dass das Sperrmittel einen Betätigungsbereich aufweist, welcher zum Verschwenken des Sperrmittels von der Verriegelungsstellung in die Entriegelungsstellung durch Druckbeaufschlagung vorgesehen ist, wobei der wenigstens eine Sperrzahn, das Zwischenteil, der Betätigungsbereich und das Lagerelement insbesondere einstückig ausgebildet sind, so dass die benötigte Teileanzahl und der Montage- und Herstellungsaufwand in vorteilhafter Weise minimiert wird.

Die Aufgabe wird ferner durch ein Schienenverstellsystem zur Längsverstellung einer Kraftfahrzeugkomponente, insbesondere eines Fahrzeugsitzes, mit einer Unterschiene und einer gegenüber der Unterschiene verschiebbaren Oberschiene, wobei die Lagerlasche einstückig mit der Oberschiene verbunden ist dadurch gelöst, dass das Schienenverstellsystem die o.g., erfindungsgemäße Verriegelungsvorrichtung aufweist. In vorteilhafter Weise wird bei dem erfindungsgemäßen Schienenverstellsystem im Vergleich zum Stand der Technik somit keine Klammer zur Befestigung des Sperrmittels an der Oberschiene benötigt, da das Sperrmittel unmittelbar an der Oberschiene befestigt wird. Die Lagerlasche umfasst dabei einen aus der Oberschiene ausgestanzten Bereich, welcher insbesondere senkrecht zur Verstellrichtung aus einer Oberfläche der Oberschiene herausgebogen ist. Die Herstellung des erfindungsgemäßen Schienenverstellsystems ist somit im Vergleich zum Stand der Technik deutlich kostengünstiger. Durch das Herausbiegen des ausgestanzten Bereichs aus der Oberfläche, insbesondere Oberseite der Oberschiene wird einerseits die Lagerlasche zur Lagerung des Lagerelements hergestellt und andererseits wird gleichzeitig eine Öffnung in der Oberschiene erzeugt, in welcher zumindest teilweise das Sperrmittel und/oder die Feder vorzugsweise angeordnet sind.

Eine Weiterbildung der vorliegenden Erfindung ist ein Schienenverstellsystem, wobei die Oberschiene wenigstens einen ersten Lagerabschnitt und die Unterschiene wenigstens einen zweiten Lagerabschnitt aufweist, wobei zwischen dem ersten und dem zweiten Lagerabschnitt eine Mehrzahl von Wälz- und/oder Kugelkörpern angeordnet sind, wobei die Unterschiene, insbesondere auf einer der Mehrzahl von Wälz- und/oder Kugelkörpern abgewandten Seite des zweiten Lagerabschnitts, wenigstens eine Ausbuchtung aufweist, welche zumindest teilweise formschlüssig an der Oberschiene anliegt. In vorteilhafter Weise wird somit ein Spiel zwischen der Oberschiene und der Unterschiene vermieden oder zumindest erheblich reduziert, wodurch sich insbesondere ungewollte Klappergeräusche verhindern oder zumindest deutlich reduzieren lassen. Vorzugsweise umfasst die Oberschiene dabei ein erstes U-Profil, welches nach Innen abgewinkelte erste Schenkel aufweist, und dass die Unterschiene ein im Wesentlichen innerhalb der Oberschiene angeordnetes zweites U-Profil umfasst, welches nach Außen abgewinkelte zweite Schenkel aufweist, wobei die ersten und zweiten Schenkel senkrecht zur Längsrichtung einander umgreifen und wobei die Ausbuchtung mit einem freien Ende des ersten Schenkels in Gleitkontakt ist. Besonders bevorzugt ist vorgesehen, dass das freie Ende des ersten Schenkels und/oder die Ausbuchtung mit einer Gleitbeschichtung, wie Teflon oder Fett, versehen ist. Ferner ist optional vorgesehen, dass das freie Ende abgerundet ausgebildet ist, beispielsweise durch ein Prägeverfahren. In vorteilhafter Weise werden somit insbesondere lediglich zwei Kugelbahnen zwischen Ober- und Unterschiene realisiert, wobei gleichzeitig die Ober- und Unterschiene auch gegenüber Kräften senkrecht zur Längsrichtung fest und spielfrei miteinander verbunden sind. Besonders bevorzugt weist das Schienenverstellsystem einen Auslösehebel auf, welcher einen Betätigungsabschnitt zum funktionalen Zusammenwirken mit dem Betätigungsbereich aufweist, wobei der Auslösehebel an einer Aufnahmelasche um eine zur Schwenkachse senkrechte Drehachse drehbar befestigt ist, wobei die Aufnahmelasche einstückig mit der Oberschiene verbunden ist und insbesondere einen weiteren aus der Oberschiene ausgestanzten Bereich umfasst, welcher vorzugsweise senkrecht zur Längsrichtung aus einer Oberfläche der Oberschiene heraus gebogen ist.

Ein weiterer Gegenstand der vorliegenende Erfindung ist ein Fahrzeugsitz mit einem erfindungsgemäßen Schienenverstellsystem.

Ein weiterer Gegenstand der vorliegenden Erfindung ist ein Verfahren zur Herstellung des o.g. Schienenverstellsystems, wobei in einem ersten Schritt die Oberschiene gestanzt wird, wobei in einem zweiten Schritt die wenigstens eine Lagerlasche aus der Oberfläche der Oberschiene herausgebogen wird und wobei in einem dritten Schritt das Sperrmittel derart an der Oberschiene montiert wird, wobei das Lagerelement in einer einseitig offenen Ausnehmung der Lagerlasche angeordnet wird. Die Herstellung und die Montage des Schienenverstellsystems sind im Vergleich zum Stand der Technik vorteilhafterweise deutlich einfacher und kostengünstiger. Vorzugsweise wird in einem vierten Schritt ein erster Endbereich der Feder derart an der Lagerlasche angeordnet, dass das Lagerelement in Richtung der einseitig offenen Ausnehmung gehalten bzw. arretiert und vorzugsweise federbeaufschlagt wird.

Ein Ausführungsbeispiel der Erfindung ist in der Zeichnung dargestellt und in der nachfolgenden Beschreibung näher erläutert. Im Folgenden wird unter Bezugnahme auf die beigefügten Zeichnungen eine rein beispielhaft aufzufassende Ausführungsform der Erfindung beschrieben, welche den allgemeinen Erfindungsgedanken keineswegs einschränkt.

Es zeigen:
- **Figur 1**: eine perspektivische, schematische Darstellung eines Schienenverstellsystem gemäß eines Ausführungsbeispiels der vorliegenden Erfindung;
- **Figur 2**: eine Detailansicht von Figur 1;
- **Figur 3**: einen Schnitt durch einen Teilbereich des in Figur 1 illustrierten Schienenverstellsystems in verriegeltem Zustand;
- **Figur 4**: einen Schnitt durch einen Teilbereich des in Figur 1 illustrierten Schienenverstellsystems in gelöstem Zustand;
- **Figur 5**: eine Detailansicht von Figur 3; und
- **Figur 6**: eine weitere Detailansicht von Figur 1.

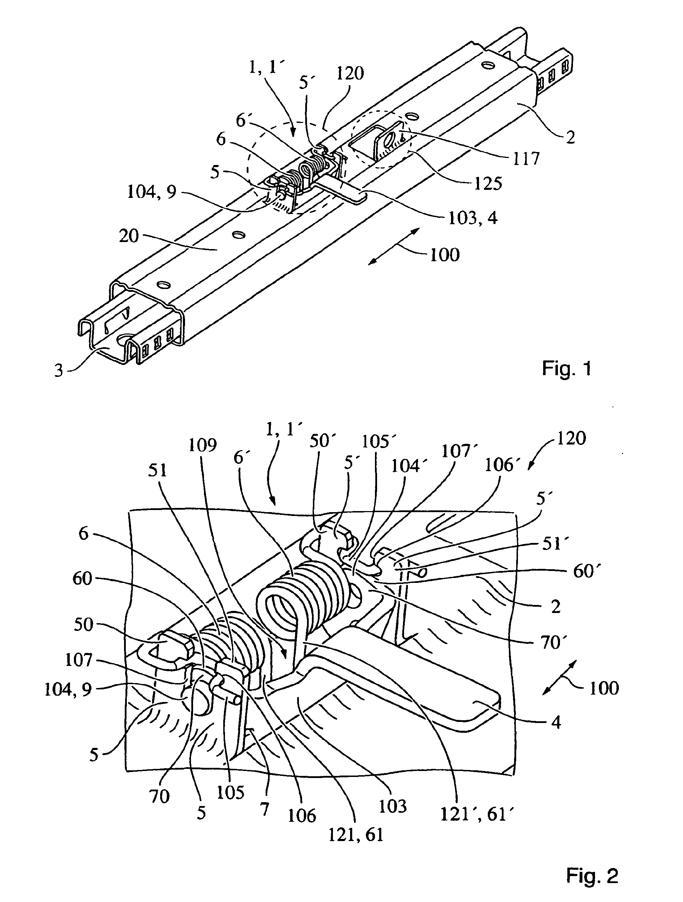

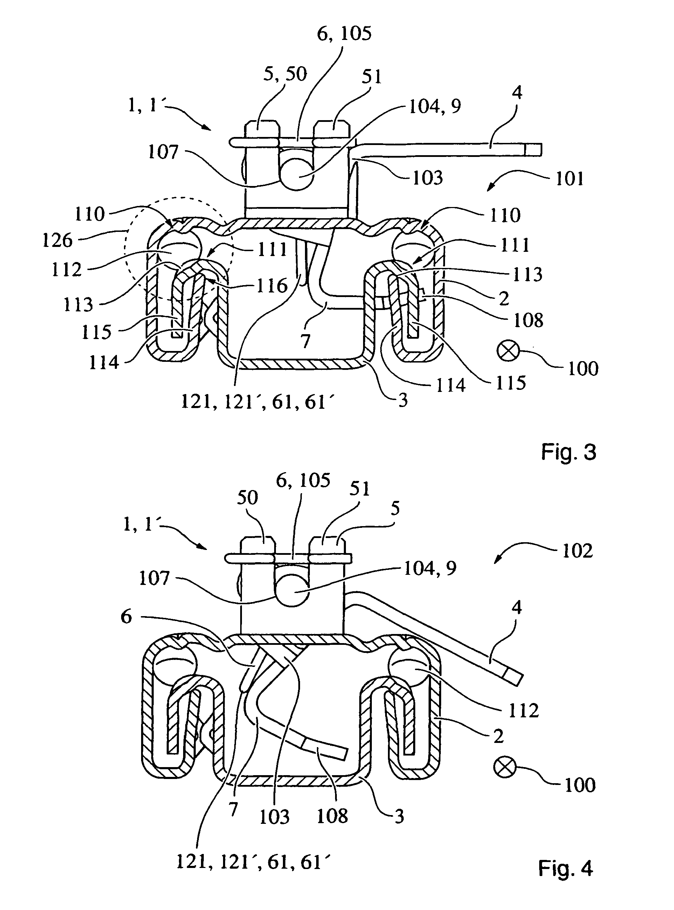

In Figur 1 ist eine schematische, perspektivische Darstellung eines Ausführungsbeispiels des erfindungsgemäßen Schienenverstellsystems 1 illustriert, wobei das Schienenverstellsystem 1 eine Verriegelungsvorrichtung 1' gemäß einer beispielhaften Ausführungsform der vorliegenden Erfindung aufweist. Das Schienenverstellsystem 1 dient der Verstellung eines (nicht dargestellten) Fahrzeugsitzes relativ zur Fahrzeugkarosserie in Längsrichtung 100 des Fahrzeuges, also in Fahrtrichtung. Das Schienenverstellsystem 1 weist eine bezüglich des Fahrzeugsitzes feste Oberschiene 2 sowie eine bezüglich der Fahrzeugkarosserie feste Unterschiene 3 auf. Ein länglicher Betätigungshebel 4 bzw. ein Betätigungsbereich 4 eines Sperrmittels 103 erstreckt sich quer zur Längsrichtung 100. Eine in Figur 3 und 4 näher beschriebene Verriegelungsverzahnung mit Verriegelungszähnen bzw. ein Zwischenteil 7 mit Sperrzähnen 108 sind in den Betätigungshebel 4 integriert, der demzufolge mit dem Zwischenteil 7 und den Sperrzähnen 108 eine einteilige Hebelanordnung bildet, welche zwischen einer in Figur 4 illustrierten Entriegelungsstellung 102, in welcher die Oberschiene 2 gegenüber der Unterschiene 3 in Längsrichtung 100 verschiebbar ist, und einer in Figur 3 illustrierten Verriegelungsstellung 101, in welcher die Oberschiene 2 gegenüber der Unterschiene 3 in Längsrichtung 100 verriegelt ist, verschwenkbar ist.

Figur 2 zeigt das vergrößerte Detail 120 von Figur 1. Die Oberschiene 2 weist als ausgestanzte Bereiche gebildete Lagerlaschen 5, 5' auf, die im Wesentlichen rechtwinklig zu einer Oberseite 20 der Oberschiene 2 abgewinkelt sind und in Längsrichtung 100 zueinander versetzt angeordnet sind. Die Lagerlaschen 5, 5' werden vorzugsweise durch Stanzen der Oberschiene 2 und Herausbiegen aus der Oberseite 20 hergestellt. Jede Lagerlasche 5, 5' weist zwei Laschenschenkel 50, 51, 50', 51' auf, deren einander zugewandte vertikalen Längsränder eine nach oben offene u-förmige Ausnehmung 107, 107' bzw. Öffnung 52, 52' in jeder Lagerlasche 5, 5' seitlich begrenzen. Die Windungen zweier als Schraubenfedern ausgebildeten Federn 6, 6' umschlingen jeweils eine in Längsrichtung 100 verlaufende geometrische Federachse. Die Federachsen beider Federn 6, 6' liegen auf einer gemeinsamen Linie. Das Sperrmittel 103 ist um eine zur Längsrichtung 100 parallele Schwenkachse verschwenkbar, wobei die Federachsen im Wesentlichen parallel und deckungsgleich zur Schwenkachse verlaufen.

Am Betätigungsbereich 4 setzt ein stumpfwinklig zum Betätigungsbereich 4 nach unten abgewinkeltes plattenförmiges Zwischenteil 7 des Sperrmittels 103 an, das starr und einstückig mit dem Betätigungsbereich 4 verbunden ist und sich teilweise in Längsrichtung 100 erstreckt.

Die den Lagerlaschen 5, 5' zugewandten Enden bzw. ersten Endbereiche 105, 105' der Federn 6, 6' sind jeweils über ein entsprechendes Verbindungsteil 60, 60' mit den zugeordneten Laschenschenkeln 50, 51, 50', 51' verbunden. Die den Lagerlaschen 5, 5' abgewandten zweiten Endbereiche 121, 121' der Federn 6, 6' gehen jeweils in einen im Wesentlichen geradlinigen Fortsatz 61, 61' über, die jeweils am Zwischenteil 7 anliegen, um die Sperrzähne 108 des Zwischenteils 7 in die Verriegelungsstellung 101 elastisch vorzuspannen. Die zweiten Endbereiche 121, 121' der beiden Federn 6, 6' sind im Anlagebereich an das Zwischenteil 7 insbesondere einstückig miteinander verbunden.

An den Längsrändern des Zwischenteils 7 setzt jeweils eine rechtwinklig vom Zwischenteil abgewinkelte Kopplungslasche 70, 70' bzw. Lagerelemente 104, 104' an. Beide starr und einstückig mit dem Sperrmittel 103 und Zwischenteil 7 verbundene Lagerelemente 104, 104' sind mit je einer runden Ausnehmung (die in den Figuren nicht ersichtlich sind) versehen, die von je einem zylindrischen Lagerbolzen 9 (von denen in den Figuren nur einer ersichtlich ist) durchgriffen wird. Die Lagerbolzen 9 sind optional einstückig und starr mit dem Sperrmittel 103 verbunden, wobei der Lagerbolzen 9 insbesondere eine am Lagerelement 104, 104' ausgebildeten Lagerbutzen (beispielsweise ein zapfenartiger Fortsatz des Lagerelements 104, 104') umfasst. Jeder Lagerbolzen 9 ist in einer einseitig offenen Ausnehmung 107, 107' an einer der Lagerlaschen 5, 5' befestigt. Die Lagerbolzen 9 sind drehbar in den Lagerlaschen 5, 5' bzw. in den einseitig offenen Ausnehmungen 107, 107' gelagert. Alternativ ist aber auch denkbar, dass die Lagerbolzen 9 drehbar in den Lagerelementen 104, 104' gelagert sind. Die Lagerelemente 104, 104' sind somit drehbar gegenüber den Lagerlaschen 5, 5' angeordnet. Mit anderen Worten ist zwischen jedem Lagerelement 104, 104' und den zugeordneten Lagerlaschen 5, 5' je ein Drehlager gebildet, über die die zuvor angesprochene Hebelanordnung um eine mit den Federachsen zusammenfallende geometrische Schwenkachse schwenkbar angelenkt ist. Das Zusammenfallen der geometrischen Schwenkachse mit den Federachsen stellt im Vergleich zu Konstruktionsvarianten mit einer gegenüber den Federachsen versetzt angeordneter Schwenkachse eine bauraumsparendere Bauweise dar. Zudem entfällt eine sonst für die schwenkbare Lagerung der Hebelanordnung erforderliche Schwenkachse. Die ersten Endbereiche 105, 105' schließen die einseitig offenen Ausnehmungen 107, 107' derart, dass die Lagerbolzen 9 jeweils zwischen den ersten Endbereichen 105, 105' und den einseitig offenen Ausnehmungen 107, 107' eingeklemmt sind, wodurch die Lagerbolzen 9 in Richtung der Ausnehmungen 107, 107' gehalten werden. Die Federn 6, 6' dienen somit der Federbelastung des Zwischenteils 7 von der Entriegelungsstellung 102 in die Verriegelungsstellung 101 und gleichzeitig zur Lagestabilisierung der Lagerelemente 104, 104' an den jeweiligen Lagerlaschen 5, 5' über die Lagerbolzen 9. Die ersten Endbereiche 105, 105' sind dabei in Nuten 106, 106' der Lagerlaschen 5, 5' form- und kraftschlüssig eingeklemmt, welche jeweils im Bereich der einseitig offenen Ausnehmungen 107, 107' ausgebildet sind.

In Figur 3 ist ein Schnitt durch einen Teilbereich des in Figur 1 illustrierten Schienenverstellsystems in einem eingreifenden Zustand, d.h. in der Verriegelungsstellung 101 gezeigt, in dem sich nur ein erster Sperrzahn 108, der zugleich eine Öffnung in der Oberschiene 2 durchgreift, in direktem Eingriff mit einer in der Unterschiene vorgesehenen Rastöffnung bzw. Rastaufnahme befindet, Wenigstens ein (in den Figuren nicht ersichtlicher) weiterer zweiter Sperrzahn dient zur erhöhten Lastaufnahme. Eine weitere Steigerung der Lastaufnahmefähigkeit kann durch Einsatz einer beliebigen Anzahl zusätzlicher Sperrzähne erreicht werden.

Bei der Situation gemäß Figur 3 befindet sich der Betätigungshebel 4 horizontal angeordnet in seiner Ruhelage, während die Federn 6, 6' im Wesentlichen entspannt sind. Vorzugsweise ist das Sperrmittel 103 weiterhin in Richtung Verriegelungsstellung 101 vorgespannt.
In Figur 4 ist die Darstellung gemäß Figur 3 in einem gelösten Zustand, d.h. in der Entriegelungsposition 102 illustriert. Der Betätigungshebel 4 wurde durch Ausübung einer manuellen Kraft F aus seiner in Figur 3 gezeigten Ruhelage gegen die Kraft der Federn 6, 6' in die schräge Position gemäß Figur 4 überführt und hierdurch die in Figur 4 gezeigte Situation erreicht, in der der erste Sperrzahn 108 außer Eingriff mit der Rastöffnungen bzw. Rastaufnahme steht, wodurch die Verriegelung zwischen Oberschiene 2 und Unterschiene 3 aufgehoben wird.

Die Ober- und Unterschiene 2, 3 sind nun entlang der Längsrichtung 100 gegeneinander verschiebbar, d.h. der Fahrzeugsitz kann nun rückwärts oder vorwärts in eine gewünschte Position längsverschoben werden. An der gewünschten Längsposition des Fahrzeugsitzes bewirkt eine Unterbrechung der Einleitung der manuellen Kraft F in den Betätigungsbereich 4 ("Entlastung des Betätigungshebels"), dass das Sperrmittel 103 - angetrieben durch die Federkraft der Federn 6, 6' - in seine Ruhelage rückgestellt wird und dadurch der in Figur 3 gezeigte eingreifende Zustand erneut eingenommen wird, in dem die Oberschiene 2 und die Unterschiene 3 gegeneinander verriegelt sind, so dass der Fahrzeugsitz an der gewünschten Längsposition festgestellt ist. Die Oberschiene 2 ist als Laufschiene unter Zwischenlage von Kugeln 112 in der Unterschiene 3 als Führungsschiene längsverschiebbar geführt.

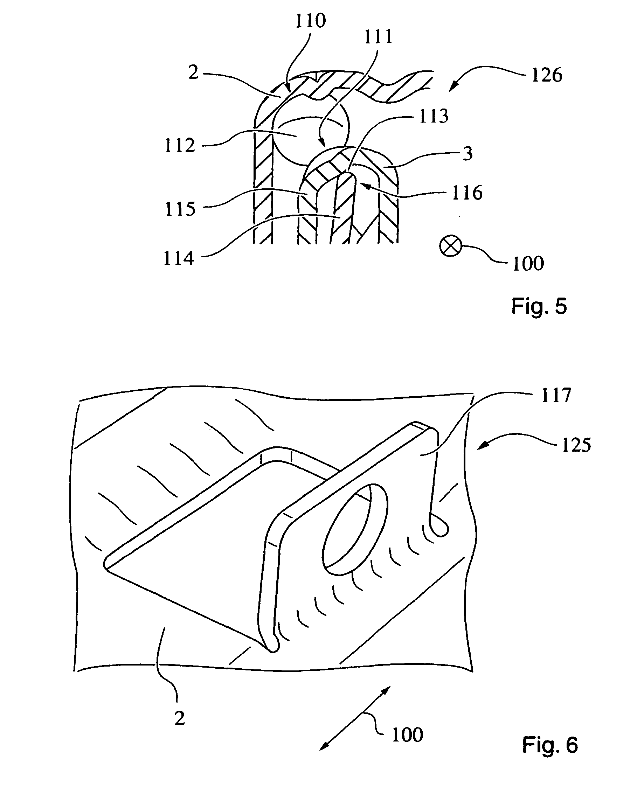

Die in Figur 5 gezeigte vergrößerte Detailansicht 126 von Figur 3 veranschaulicht schematisch den Ausgleich des Spiels zwischen den Schienenprofilen 2, 3 (also im Einzelnen zwischen der Oberschiene 2 und der Unterschiene 3) des Schienenverstellsystems 1. Hierbei weist die Oberschiene 2 wenigstens einen ersten Lagerabschnitt 110 und die Unterschiene 3 wenigstens einen zweiten Lagerabschnitt 111 auf, wobei zwischen dem ersten und dem zweiten Lagerabschnitt 110, 111 die Kugeln 112 angeordnet sind. Die Unterschiene 3 weist dabei auf einer der Mehrzahl von Kugeln 112 abgewandten Seite des zweiten Lagerabschnitts 111 wenigstens eine Ausbuchtung 113 auf, welche zumindest teilweise formschlüssig an der Oberschiene 2 anliegt, so dass die Ausbuchtung 113 mit einem freien Ende 116 des ersten Schenkels 114 in Gleitkontakt ist und somit ein Spiel zwischen der Ober- und Unterschiene 2, 3 unterbunden wird. Die Oberschiene 2 umfasst im vorliegenden Ausführungsbeispiel beispielhaft ein erstes U-Profil, welches nach Innen abgewinkelte erste Schenkel 114 aufweist, während die Unterschiene 3 ein im Wesentlichen innerhalb der Oberschiene 2 angeordnetes zweites U-Profil umfasst, welches nach Außen abgewinkelte zweite Schenkel 115 aufweist, wobei die ersten und zweiten Schenkel 114, 115 senkrecht zur Längsrichtung 100 einander umgreifen.

Durch die gegenseitige Abstützung der beiden Schienenprofile 2, 3 sind das Lateral- und Vertikalspiel zwischen den Schienenprofilen 2, 3 auf ein Minimum reduziert bzw. vollständig eliminiert.

In Figur 6 ist ein vergrößertes Detail 125 von Figur 1 dargestellt, das ein ausgestanztes Aufnahmelager 117 für ein nicht abgebildetes Betätigungselement zeigt, das im Wesentlichen rechtwinklig zur Oberseite 20 der Oberschiene 2 abgewinkelt ist. Die Oberschiene 2 bildet gemeinsam mit den ausgestanzten Lagerlaschen 5, 5' und dem ausgestanzten Aufnahmelager 117 eine einteilige Oberschienenanordnung. Zur Profilgestaltung der Oberschiene kann die einfache und kostengünstige Rollformtechnologie eingesetzt werden. Die genannte Oberschienenanordnung kann durch bloßes Rollformen und Stanzen aus einem entsprechenden Ausgangsmaterial etwa in Gestalt eines Metallbandes hergestellt werden.

### Bezugszeichenliste

- 1: Schienenverstellsystem
- 1': Verriegelungsvorrichtung
- 2: Oberschiene
- 3: Unterschiene
- 4: Betätigungsbereich bzw. Betätigungshebel
- 5, 5': Lagerlaschen
- 6, 6': Federn bzw. Schraubenfedern
- 20: Oberseite (der Oberschiene)
- 50,50': Laschenschenkel
- 51, 51': Laschenschenkel
- 52, 52': Öffnungen (in den Lagerlaschen)
- 60, 60': Verbindungsteile
- 61, 61': Fortsatz
- 70, 70': Kopplungslasche
- 100: Längsrichtung (des Fahrzeugs)
- 101, 102: Verriegelungs- /Entriegelungsstellung
- 103: Sperrmittel
- 104, 104': Lagerelement
- 105, 105': Erster Endbereich (der Federn)
- 106, 106': Nut (in den Ausnehmungen)
- 107, 107': Ausnehmungen
- 108: Sperrzahn
- 109: Öffnung (in der Oberschiene)
- 110, 111: Erster und zweiter Lagerabschnitt
- 112: Wälzkörper, Kugelkörper
- 113: Ausbuchtung
- 114: Erster Schenkel
- 115: Zweiter Schenkel
- 116: Freies Ende
- 117: Aufnahmelasche
- 120, 125, 16: Detailansichten
- 121, 121': Zweiter Endbereich

## Patentansprüche

1. Verriegelungsvorrichtung (1') zur Längsverstellung einer Kraftfahrzeugkomponente, insbesondere eines Fahrzeugsitzes, wobei die Verriegelungsvorrichtung (1') ein Sperrmittel (103) aufweist, welches zwischen einer Entriegelungsstellung (102), in welcher eine Oberschiene (2) gegenüber einer Unterschiene (3) in Längsrichtung (100) verschiebbar ist, und einer Verriegelungsstellung (101), in welcher die Oberschiene (2) gegenüber der Unterschiene (3) in Längsrichtung (100) verriegelt ist, verschwenkbar ist, wobei wenigstens ein Lagerelement (104, 104') des Sperrmittels (103) gegenüber wenigstens einer Lagerlasche (5, 5') schwenkbar gelagert ist und wobei das Sperrmittel (103) mittels wenigstens einer Feder (6, 6') in die Verriegelungsstellung (101) vorgespannt ist, wobei die Feder (6, 6') ferner zur Lagestabilisierung des Lagerelements (104, 104') gegenüber der Lagerlasche (5, 5') vorgesehen ist, wobei die Feder (6, 6') eine Schraubenfeder umfasst, dessen Federachse im Wesentlichen parallel und deckungsgleich zur Schwenkachse verlaufend ausgebildet ist, **dadurch gekennzeichnet, dass** das Sperrmittel (103) ein Zwischenteil (7) umfasst, an welchem wenigstens ein Sperrzahn (108) angeordnet ist, welcher in der Verriegelungsstellung (101) in Eingriff mit Rastöffnungen der Ober- und Unterschiene (2, 3) ist und welcher in der Entriegelungsstellung (102) außer Eingriff mit den Rastöffnungen der Ober- und Unterschiene (2, 3) ist, wobei ein zweiter Endbereich der Feder (6, 6') das Zwischenteil (7) in Richtung der Verriegelungsstellung (101) feder beaufschlagt, wobei das Zwischenteil (7) und der wenigstens eine Sperrzahn (108) in einem Innenraum zwischen der Ober- und Unterschiene (2, 3) angeordnet sind.

2. Verriegelungsvorrichtung (1') nach einem der vorhergehenden Ansprüche, **dadurch gekennzeichnet, dass** wenigstens ein erster Endbereich (105, 105') der Feder (6, 6') an der Lagerlasche (5, 5') befestigt ist, wobei der erste Endbereich (105, 105') insbesondere einen Befestigungsschenkel aufweist, welcher in wenigstens einer Nut (106, 106') der Lagerlasche (5, 5') kraft- und/oder formschlüssig befestigt ist.

3. Verriegelungsvorrichtung (1') nach Anspruch 2, **dadurch gekennzeichnet, dass** die Lagerlasche (5, 5') eine einseitig offene Ausnehmung (107, 107') aufweist, wobei das Lagerelement (104, 104') einen in der offenen Ausnehmung (107, 107') angeordneten Lagerbolzen (9) umfasst und wobei der erste Endbereich (105, 105') derart in der offenen Ausnehmung (107, 107') angeordnet ist, dass der Lagerbolzen (9) durch den ersten Endbereich (105, 105') in Richtung der offenen Ausnehmung (107, 107') gehalten wird.

4. Verriegelungsvorrichtung (1') nach einem der vorhergehenden Ansprüche, **dadurch gekennzeichnet, dass** wenigstens ein Sperrzahn (108) abgeschrägte Zahnflanken zur Reduktion des Spiels zwischen der Ober- und der Unterschiene (2, 3) in der Verriegelungsstellung (101) aufweist und/oder dass in der Verriegelungsstellung (101) wenigstens ein Sperrzahn (108) in zwei Rastöffnungen der Unterschiene (3) eingreift.

5. Verriegelungsvorrichtung (1') nach einem der vorhergehenden Ansprüche, **dadurch gekennzeichnet, dass** das Sperrmittel (103) einen Betätigungsbereich (4) aufweist, welcher zum Verschwenken des Sperrmittels (103) von der Verriegelungsstellung (101) in die Entriegelungsstellung (102) durch Druckbeaufschlagung vorgesehen ist, wobei der wenigstens eine Sperrzahn (108), das Zwischenteil (7), der Betätigungsbereich (4) und das Lagerelement (104, 104') einstückig ausgebildet sind.

6. Schienenverstellsystem (1) zur Längsverstellung einer Kraftfahrzeugkomponente, insbesondere eines Fahrzeugsitzes, mit einer Unterschiene (3) und einer gegenüber der Unterschiene (3) verschiebbaren Oberschiene (2), wobei das Schienenverstellsystem (1) eine Verriegelungsvorrichtung (1') nach einem der vorhergehenden Ansprüche aufweist, wobei die Lagerlasche (5, 5') einstückig mit der Oberschiene (2) verbunden ist, **dadurch gekennzeichnet, dass** die Lagerlasche (5, 5') einen aus der Oberschiene (2) ausgestanzten Bereich umfasst, welcher insbesondere senkrecht zur Verstellrichtung aus einer Oberfläche der Oberschiene (2) herausgebogen ist.

7. Schienenverstellsystem (1) nach Anspruch 6, **dadurch gekennzeichnet, dass** das Sperrmittel (103) und/oder die Feder (6, 6') zumindest teilweise innerhalb einer Öffnung (109) der Oberschiene (2) angeordnet sind, wobei die Öffnung (109) durch das Umbiegen des ausgestanzten Bereichs gebildet ist.

8. Schienenverstellsystem (1) nach einem der Ansprüche 6 oder 7, **dadurch gekennzeichnet, dass** die Oberschiene (2) wenigstens einen ersten Lagerabschnitt (110) und die Unterschiene (3) wenigstens einen zweiten Lagerabschnitt (111) aufweist, wobei zwischen dem ersten und dem zweiten Lagerabschnitt (110, 111) eine Mehrzahl von Wälz- und/oder Kugelkörpern (112) angeordnet sind, wobei die Unterschiene (3), insbesondere auf einer der Mehrzahl von
Wälz- und/oder Kugelkörpern (112) abgewandten Seite des zweiten Lagerabschnitts (111), wenigstens eine Ausbuchtung (113) aufweist, welche zumindest teilweise formschlüssig an der Oberschiene (2) anliegt.

9. Schienenverstellsystem (1) nach Anspruch 8, **dadurch gekennzeichnet, dass** die Oberschiene (2) ein erstes U-Profil umfasst, welches nach Innen abgewinkelte erste Schenkel (114) aufweist, und dass die Unterschiene (3) ein im Wesentlichen innerhalb der Oberschiene (2) angeordnetes zweites U-Profil umfasst, welches nach Außen abgewinkelte zweite Schenkel (115) aufweist, wobei die ersten und zweiten Schenkel (114, 115) senkrecht zur Längsrichtung (100) einander umgreifen und wobei die Ausbuchtung (113) mit einem freien Ende (116) des ersten Schenkels (114) in Gleitkontakt ist.

10. Schienenverstellsystem (1) nach einem der Ansprüche 6 bis 9, **dadurch gekennzeichnet, dass** das Schienenverstellsystem (1) einen Auslösehebel aufweist, welcher einen Betätigungsabschnitt zum funktionalen Zusammenwirken mit dem Betätigungsbereich (4) aufweist, wobei der Auslösehebel an einer Aufnahmelasche (117) um eine zur Schwenkachse senkrechte Drehachse drehbar befestigt ist, wobei die Aufnahmelasche einstückig mit der Oberschiene (2) verbunden ist und insbesondere einen weiteren aus der Oberschiene (2) ausgestanzten Bereich umfasst, welcher vorzugsweise senkrecht zur Längsrichtung (100) aus einer Oberfläche der Oberschiene (2) heraus gebogen ist.

11. Fahrzeugsitz mit einem Schienenverstellsystem (1) nach einem der Ansprüche 6 bis 10.

12. Verfahren zur Herstellung des Schienenverstellsystems (1) nach einem der Ansprüche 6 bis 10, **dadurch gekennzeichnet, dass** in einem ersten Schritt die Oberschiene (2) gestanzt wird, dass in einem zweiten Schritt die wenigstens eine Lagerlasche (5, 5') aus der Oberfläche der Oberschiene (2) herausgebogen wird und dass in einem dritten Schritt das Sperrmittel (103) derart an der Oberschiene (2) montiert wird, dass das Lagerelement (104, 104') in einer einseitig offenen Ausnehmung (107, 107') der Lagerlasche (5, 5') angeordnet wird.

13. Verfahren nach Anspruch 12, **dadurch gekennzeichnet, dass** in einem vierten Schritt ein erster Endbereich der Feder (6, 6') derart an der Lagerlasche (5, 5') angeordnet wird, dass das Lagerelement (104, 104') in Richtung der einseitig offenen Ausnehmung (107, 107') gehalten wird.

## Claims

1. Locking device (1') for the longitudinal adjustment of a motor vehicle component, in particular of a vehicle seat, wherein the locking device (1') comprises a blocking means (103) which is pivotable between an unlocked position (102) in which an upper rail (2) is displaceable relative to a lower rail (3) in the longitudinal direction (100) and a locked position (101) in which the upper rail (2) is locked relative to the lower rail (3) in the longitudinal direction (100), wherein at least one bearing element (104, 104') of the blocking means (103) is pivotably mounted relative to at least one bearing tab (5, 5') and wherein the blocking means (103) is pretensioned by means of at least one spring (6, 6') into the locked position (101), wherein the spring (6, 6') is also provided for stabilizing the position of the bearing element (104, 104') relative to the bearing tab (5, 5') the spring (6, 6') comprises a helical spring, the spring axis thereof being configured to extend substantially parallel and congruent relative to the pivot axis, **characterized in that** the blocking means (103) comprises an intermediate part (7) on which at least one blocking tooth (108) is arranged, said blocking tooth in the locked position (101) being in engagement with latching openings of the upper and lower rails (2, 3), and in the unlocked position (102) being out of engagement with the latching openings of the upper and lower rails (2, 3), wherein a second end region of the spring (6, 6') subjects the intermediate part (7) to load by means of the spring in the direction of the locked position (101), wherein the intermediate part (7) and the at least one blocking tooth (108) are arranged in an internal space between the upper and lower rails (2, 3).

2. Locking device (1') according to Claim 1, **characterized in that** at least one first end region (105, 105') of the spring (6, 6') is fastened to the bearing tab (5, 5'), wherein the first end region (105, 105') comprises, in particular, a fastening limb which is fastened in at least one groove (106, 106') of the bearing tab (5, 5') in a non-positive and/or positive manner.

3. Locking device (1') according to Claim 2, **characterized in that** the bearing tab (5, 5') has a recess (107, 107') which is open on one side, wherein the bearing element (104, 104') comprises a bearing pin (9) arranged in the open recess (107, 107') and wherein the first end region (105, 105') is arranged in the open recess (107, 107') such that the bearing pin (9) is held by the first end region (105, 105') in the direction of the open recess (107, 107').

4. Locking device (1') according to one of the preceding claims, **characterized in that** at least one blocking tooth (108) comprises chamfered tooth flanks for reducing the play between the upper and lower rails (2, 3) in the locked position (101) and/or **in that** in the locked position (101) at least one blocking tooth (108) engages in two latching openings of the lower rail (3).

5. Locking device (1') according to one of the preceding claims, **characterized in that** the blocking means (103) comprises an actuating region (4) which is provided for pivoting the blocking means (103) from the locked position (101) into the unlocked position (102) by the action of pressure, wherein the at least one blocking tooth (108), the intermediate part (7), the actuating region (4) and the bearing element (104, 104') are configured in one piece.

6. Rail adjustment system (1) for the longitudinal adjustment of a motor vehicle component, in particular of a vehicle seat, comprising a lower rail (3) and an upper rail (2) which is displaceable relative to the lower rail (3), wherein the rail adjustment system (1) comprises a locking device (1') according to one of the preceding claims, wherein the bearing tab (5, 5') is integrally connected to the upper rail (2), **characterized in that** the bearing tab (5, 5') comprises a region stamped out of the upper rail (2), which is bent back from a surface of the upper rail (2), in particular perpendicular to the direction of adjustment.

7. Rail adjustment system (1) according to Claim 6, **characterized in that** the blocking means (103) and/or the spring (6, 6') are arranged at least partially inside an opening (109) of the upper rail (2), wherein the opening (109) is formed by bending back the stamped-out region.

8. Rail adjustment system (1) according to one of Claims 6 or 7, **characterized in that** the upper rail (2) comprises at least one first bearing portion (110) and the lower rail (3) comprises at least one second bearing portion (111), wherein a plurality of roller bodies and/or spherical bodies (112) are arranged between the first and second bearing portions (110, 111), wherein the lower rail (3), in particular on a side of the second bearing portion (111) remote from the plurality of roller bodies and/or spherical bodies (112), comprises at least one bulged portion (113) which bears at least partially positively against the upper rail (2).

9. Rail adjustment system (1) according to Claim 8, **characterized in that** the upper rail (2) comprises a first U-shaped profile which comprises first limbs (114) bent back inwardly, and **in that** the lower rail (3) comprises a second U-shaped profile arranged substantially inside the upper rail (2), which comprises second limbs (115) bent back outwardly, wherein the first and second limbs (114, 115) encompass one another perpendicular to the longitudinal direction (100) and wherein the bulged portion (113) is in sliding contact with a free end (116) of the first limb (114).

10. Rail adjustment system (1) according to one of Claims 6 to 9, **characterized in that** the rail adjustment system (1) comprises a release lever which has an actuating portion for functional cooperation with the actuating region (4), wherein the release lever is rotatably fastened to a receiver tab (117) about a rotational axis perpendicular to the pivot axis, wherein the receiver tab is integrally connected to the upper rail (2) and, in particular, comprises a further region stamped out of the upper rail (2), which is bent back from a surface of the upper rail (2), preferably perpendicular to the longitudinal direction (100).

11. Vehicle seat comprising a rail adjustment system (1) according to one of Claims 6 to 10.

12. Method for producing the rail adjustment system (1) according to one of Claims 6 to 10, **characterized in that** in a first step the upper rail (2) is stamped, **in that** in a second step the at least one bearing tab (5, 5') is bent back from the surface of the upper rail (2), and **in that** in a third step the blocking means (103) is mounted on the upper rail (2) such that the bearing element (104, 104') is arranged in a recess (107, 107') of the bearing tab (5, 5') which is open on one side.

13. Method according to Claim 12, **characterized in that** in a fourth step a first end region of the spring (6, 6') is arranged on the bearing tab (5, 5') such that the bearing element (104, 104') is held in the direction of the recess (107, 107') which is open on one side.

## Revendications

1. Dispositif de verrouillage (1') utilisé pour le réglage longitudinal d'un composant de véhicule automobile, notamment d'un siège de véhicule, le dispositif de verrouillage (1') comportant un moyen de blocage (103) pouvant être basculé entre une position de déverrouillage (102) dans laquelle un rail supérieur (2) peut être coulissé par rapport à un rail inférieur (3) dans la direction longitudinale (100) et une position de verrouillage (101) dans laquelle le rail supérieur (2) est verrouillé par rapport au rail inférieur (3) dans la direction longitudinale (100), au moins un élément de palier (104, 104') du moyen de blocage (103) étant disposé de façon à pouvoir pivoter par rapport à au moins une patte de palier (5, 5') et le moyen de blocage (103) étant précontraint dans la position de verrouillage (101) à l'aide d'au moins un ressort (6, 6'), le ressort (6, 6') étant en outre prévu pour réaliser la stabilisation de position de l'élément de palier (104, 104') par rapport à la patte de palier (5, 5'), le ressort (6, 6') comprenant un ressort à vis dont l'axe de ressort est réalisé de façon à s'étendre pour l'essentiel parallèlement et à la façon d'un couvercle par rapport à l'axe de pivotement, **caractérisé en ce que** le moyen de blocage (103) comprend une partie intermédiaire (7) au niveau de laquelle au moins une dent de blocage (108) est disposée, ladite dent étant en prise avec les ouvertures d'encliquetage du rail supérieur et inférieur (2, 3) dans la position de verrouillage (101) et étant hors de prise des ouvertures d'encliquetage du rail supérieur et inférieur (2, 3) dans la position de déverrouillage (102), une deuxième zone d'extrémité du ressort (6, 6') chargeant par ressort la partie intermédiaire (7) en direction de la position de verrouillage (101), la partie intermédiaire (7) et l'au moins une dent de blocage (108) étant disposées dans un espace intérieur prévu entre le rail supérieur et inférieur (2, 3).

2. Dispositif de verrouillage (1') selon la revendication 1, **caractérisé en ce qu'**au moins une première zone d'extrémité (105, 105') du ressort (6, 6') est fixée à la patte de palier (5, 5'), la première zone d'extrémité (105, 105') comportant notamment un côté de fixation fixé par complémentarité de forces et/ou de formes dans au moins une encoche (106, 106') de la patte de palier (5, 5').

3. Dispositif de verrouillage (1') selon la revendication 2, **caractérisé en ce que** la patte de palier (5, 5') comporte un évidement ouvert (107, 107') unilatéral, l'élément de palier (104, 104') comprenant un boulon de palier (9) disposé dans l'évidement ouvert (107, 107') et la première zone d'extrémité (105, 105') étant disposée de telle sorte dans l'évidement ouvert (107, 107') que le boulon de palier (9) est maintenu par la première zone d'extrémité (105, 105') en direction de l'évidement ouvert (107, 107').

4. Dispositif de verrouillage (1') selon l'une quelconque des revendications précédentes, **caractérisé en ce qu'**au moins une dent de blocage (108) comporte des flancs de dent biseautés permettant de réduire le jeu entre le rail supérieur et inférieur (2, 3) dans la position de verrouillage (101) et/ou qu'au moins une dent de blocage (108) s'engrène dans les deux ouvertures d'encliquetage du rail inférieur (3) dans la position de verrouillage (101).

5. Dispositif de verrouillage (1') selon l'une quelconque des revendications précédentes, **caractérisé en ce que** le moyen de blocage (103) comporte une zone d'actionnement (4) prévue pour basculer le moyen de blocage (103) de la position de verrouillage (101) dans la position de déverrouillage (102) par sollicitation en pression, l'au moins une dent de blocage (108), la partie intermédiaire (7), la zone d'actionnement (4) et l'élément de palier (104, 104') étant réalisés d'un seul tenant.

6. Système de réglage de rail (1) utilisé pour le réglage longitudinal d'un composant de véhicule automobile, notamment d'un siège de véhicule, avec un rail inférieur (3) et un rail supérieur (2) pouvant être coulissé par rapport au rail inférieur (3), le système de réglage de rail (1) comportant un dispositif de verrouillage (1') selon l'une quelconque des revendications précédentes, la patte de palier (5, 5') étant reliée d'un seul tenant au rail supérieur (2), **caractérisé en ce que** la patte de palier (5, 5') comprend une zone découpée extraite du rail supérieur (2) et fléchie de façon à la faire ressortir d'une surface du rail supérieur (2), notamment perpendiculairement à la direction de réglage.

7. Système de réglage de rail (1) selon la revendication 6, **caractérisé en ce que** le moyen de blocage (103) et/ou le ressort (6, 6') sont disposés au moins en partie à l'intérieur d'une ouverture (109) du rail supérieur (2), l'ouverture (109) étant formée par flexion de la zone découpée.

8. Système de réglage de rail (1) selon l'une quelconque des revendications 6 ou 7, **caractérisé en ce que** le rail supérieur (2) comporte au moins une première section de palier (110) et que le rail inférieur (3) comporte au moins une deuxième section de palier (111), une pluralité de corps de roulement et/ou de corps sphériques (112) étant disposée entre la première et la deuxième section de palier (110, 111), le rail inférieur (3) présentant au moins un bombement (113), notamment sur un côté de la deuxième section de palier (111) opposé à la pluralité de corps de roulement et/ou de corps sphériques (112), ledit bombement reposant, au moins en partie par complémentarité de formes, contre le rail supérieur (2).

9. Système de réglage de rail (1) selon la revendication 8, **caractérisé en ce que** le rail supérieur (2) comprend un premier profilé en U comportant un premier côté (114) coudé vers l'intérieur et que le rail inférieur (3) comprend un deuxième profilé en U disposé pour l'essentiel à l'intérieur du rail supérieur (2) comportant un deuxième côté (115) coudé vers l'extérieur, les premier et deuxième côtés (114, 115) s'engrenant l'un l'autre perpendiculairement à la direction longitudinale (100) et le bombement (113) étant en contact glissant avec une extrémité libre (116) du premier côté (114).

10. Système de réglage de rail (1) selon l'une quelconque des revendications 6 à 9, **caractérisé en ce que** le système de réglage de rail (1) comporte un levier de déclenchement comportant une section d'actionnement permettant l'interaction fonctionnelle avec la zone d'actionnement (4), le levier de déclenchement étant fixé à une patte de support (117) de façon à pouvoir pivoter autour d'un axe de rotation perpendiculaire à l'axe de pivotement, la patte de support étant reliée d'un seul tenant au rail supérieur (2) et comprenant notamment une zone découpée supplémentaire extraite du rail supérieur (2) et fléchie de préférence perpendiculairement à la direction longitudinale (100) de façon à la faire ressortir de la surface du rail supérieur (2).

11. Siège de véhicule doté d'un système de réglage de rail (1) selon l'une quelconque des revendications 6 à 10.

12. Procédé de fabrication du système de réglage de rail (1) selon l'une quelconque des revendications 6 à 10, **caractérisé en ce que** le rail supérieur (2) est découpé au cours d'une première étape, que l'au moins une patte de palier (5, 5') est fléchie de façon à ressortir de la surface du rail supérieur (2) au cours d'une deuxième étape et que le moyen de blocage (103) est monté sur le rail supérieur (2) au cours d'une troisième étape de telle sorte que l'élément de palier (104, 104') est disposé dans un évidement ouvert (107, 107') unilatéral de la patte de palier (5, 5').

13. Procédé selon la revendication 12, **caractérisé en ce qu'**au cours d'une quatrième étape, une première zone d'extrémité du ressort (6, 6') est disposée de telle sorte sur la patte de palier (5, 5') que l'élément de palier (104, 104') est maintenu en direction de l'évidement ouvert (107, 107') unilatéral.
